# EUROPEAN PATENT APPLICATION

(11) **EP 1 380 338 A2**
(43) Date of publication of application: **14.01.2004**
(21) Application number: 03254288.8
(22) Date of filing: 07.07.2003
(51) Int. Cl.: B01J 19/00, G01N 33/543

(54) **Method for producing a microarray**

(30) Priority: 12.07.2002 JP 2002203624
(71) Applicant: NISSHINBO INDUSTRIES, INC., Chuo-ku, Tokyo (JP)
(72) Inventor: Shoji, Tomoaki, c/o Nisshinbo Industries, Inc., Chiba-shi, Chiba (JP)
(74) Representative: Tombling, Adrian George

(57) **Abstract**

A plurality of droplets of a liquid sample containing a biological substance are applied to positions where all the droplets join with one another on a surface of a water repellent substrate by using a microarrayer of the ink-jet type having a jet tip, the microarrayer exerting a pressure on the liquid sample contained therein to eject a droplet amount of the liquid sample from the jet tip, to form a spot constructed by an integrated body of the plurality of the droplets on the surface of the substrate. This enables easy, efficient and uniform production of spots of sizes that can be easily observed visually by using a non-contact type microarrayer capable of forming minute spots.

## Description

### BACKGROUND OF THE INVENTION

### FIELD OF THE INVENTION

The present invention relates to a method for producing a microarray, and more particularly to a method for forming spots each having a desired size by using a microarrayer that supplies a sample onto a substrate in a non-contact manner like an ink-jet type microarrayer.

### DESCRIPTION OF THE RELATED ART

For detection of a biological substance that can be detected by virtue of a specific reaction, a microarray has conventionally been used, which comprises a substrate having fixed a biological substance as one of a reactant of the specific reaction on a plurality of positions on a surface of the substrate. As a method for producing such a microarray, for example, a method in which a microarrayer of the ink-jet type is used has been known. The microarrayer used in this method generally is an apparatus that has a nozzle with a jet tip on the tip of the nozzle, gives pressure to a liquid sample contained in the nozzle by utilizing the action of a piezo element and so on, and ejects a minute amount of the liquid sample from the jet tip to apply the liquid sample to the substrate. Use of such a microarrayer enables formation of minute spots of 0.1 mm or less in diameter on the surface of the substrate.

One example of the method for producing a microarray by using the above-mentioned microarrayer is a process in which a sample is applied to a surface of the substrate at a high density and efficiently by use of a microarrayer of the ink-jet type as disclosed in, for example, JP 11-187900 A. The method for producing a microarray enables production of a microarray comprising a substrate having formed on a surface of the substrate minute spots at a high density so that the method is excellent in producing a microarray that can provide much information from a small amount of a specimen. Further, the above-mentioned method for producing a microarray can apply a sample to a surface of the substrate in a non-contact state, so that the method is excellent in preventing contamination of the microarrayer upon the applying.

The microarray produced by using the microarrayer of the ink-jet type has minute spots thereon, so that the spots are difficult to visually verify. Therefore, in detecting a biological substance by using such a microarray, it has been generally the case that fluorescence labeling is adopted and the labeled biological substance is detected by a fluorescent scanner. For example, in detecting a DNA, the DNA is hybridized with a PCR (polymerase chain reaction) product labeled with a fluorescent substance such as Cy3 or Cy5, and then the labeled DNA is detected by a fluorescent scanner.

On the other hand, in the detection of abiological substance by using a microarray, a method has been known in which detect the biological substrate visually by using a reagent such as a colored label whose detection is carried out visually. The method for detecting is a method that is excellent in providing satisfactory detection results with ease without requiring any detection instrument. For example, in the detection of a DNA, the DNA is hybridized with a biotin-labeled PCR product and presence or absence of coloring is visually detected with St-HRP (streptoavidin-horseradish peroxidase) and TMB (tetramethylbenzidine). However, the microarray fabricated by using the above-mentioned microarrayer of the ink-jet type have minute spots, so that it is difficult to identify them visually and hence it is difficult to adopt the method for detecting in which the colored label is used.

Although the above-mentioned microarrayer of the ink-jet type ejects droplets of a sample, each droplet being in a volume of usually several nanoliters (n1) or less, the number of droplets can be set at any desired number. Therefore, it is possible to form larger spots by making several to several tens droplets apply to a specified coordinate on the substrate. However, the spots thus formed are greatly protuberant owing to surface tension of the sample. Accordingly, to form spots of a sample with a predetermined size, a large amount of the sample is required. In addition, the formed spots each having a protuberant shape tend to cause a biological substance to be fixed on a surface of the substrate in the form of a ring. Thus it is difficult to fix the biological substance on the substrate uniformly.

Further, JP 2001-337096 A discloses a method for producing a microarray in which a plurality of droplets of a sample solution are supplied to form a single spot. In this process, a plurality of the droplets are supplied to discrete positions. However, supplying of the plurality of the droplets to such positions sometimes results in a failure to sufficiently join the droplets with each other. Thus a room for a further study for obtaining spots each having a desired size is left.

### SUMMARY OF THE INVENTION

An object of the present invention is to provide a process for forming spots each having a size that can be visually observed with ease easily, efficiently and uniformly by using a non-contact type microarrayer capable of forming minute spots.

As means for attaining the above-mentioned object, the present invention provides a method for producing a microarray that comprises depositing a plurality of droplets of samples onto a surface of a substrate at positions where the droplets can join thereon to form a mass of the droplets.

Thus, the present invention relates to a method for producing a microarray which comprises a substrate and at least one spot of a sample on a surface of the substrate comprising applying droplets of a liquid sample containing a biological substance to a plurality of positions on a surface of a water repellent substrate by using a microarrayer of the ink-jet type having ajet tip, the microarrayer exerting pressure on the liquid sample contained therein to eject a droplet amount of the liquid sample from the jet tip, to form a spot on the surface of the substrate, wherein a plurality of droplets are applied to positions where all the droplets join with one another to form the spot.

In the method for producing a microarray according to the present invention, droplets of the liquid sample containing a biological substance are applied to positions where a plurality of droplets are placed adjacent to each other and all of them merge with each other to form an integral mass, thereby forming a spot on a surface of a water repellent substrate.

The microarrayer of the ink-jet type used in the present invention is means for supplying a predetermined amount of a sample to a desired position on a substrate in a non-contact state with the substrate. In the present invention, a microarrayer of the ink-jet type is used as one preferable means from among such means. The microarrayer of the ink-jet type is not particularly limited so far as it exerts a pressure onto a liquid sample contained therein to eject a single droplet amount of the sample through the jet tip and known ink-jet type microarrayers may be used for the purpose. Examples of such ink-jet type microarrayers include a microarrayer of the piezo-jet type that ejects a sample through a jet tip utilizing a vibratory pressure of a piezo element and a microarrayer that imparts a sample with thermal energy to form bubbles and eject the sample through a jet tip.

The sample used in the present invention is not particularly limited so far as it is a liquid sample containing a biological substance. The biological substance is only needed to be a substance that causes a specific reaction detected usually by using a microarray and includes, for example, nucleic acids, proteins, sugars, and lipids. The biological substance may be either an unknown substance to be detected or a known substance for detecting an unknown substance. The sample may contain an adjusting agent such as a buffer solution for adjusting the chemical properties of the biological substance and an additive such as a thickner for adjusting the physical properties of the sample as appropriate.

The substrate used in the present invention is not particularly limited so far as it has water repellency. The water repellency of the substrate is sufficient if it is on the order of allowing surface tension to exert on the sample on the substrate. If the water repellency of the substrate is too weak, the spot as a result of the merger of the droplets will spread too much on the substrate. This is undesirable for sufficiently and uniformly performing a specific reaction after fixing the biological substance or a coloring reaction. If the water repellency of the substrate is too strong, the positions of the droplets on the surface of the substrate is difficult to fix and the amounts of the sample required for forming a plurality of droplets, respectively, increase. This is also undesirable.

Note that in the present invention, the water repellency of the substrate may be non-uniform from place to place on the surface of the substrate. For example, a weak water repellency region and a strong water repellency region that surrounds the weak water repellency region may be provided on the surface of the substrate. The water repellency of the substrate can be adjusted by selection of the material of the substrate or surface treatment, such as hydrophobization or hydrophilization, of the substrate.

The substrate of the present invention can be formed from a known material. Examples of such a known material include glass, plastics, metals, and ceramics. It is preferable that the substrate used in the present invention be made of a material onto which biological substances can be fixed. Such a preferable material includes glass and plastics. Further, plastics are particularly preferable from the viewpoint of ease of molding. Even those materials onto which biological substances cannot be fixed sufficiently may be used advantageously for the substrate by covering the surface of the substrate with a resin compound such as a carbodiimide resin.

In the present invention, a plurality of droplets is delivered to positions where all the droplets join with one another to form the spot. Usually, the droplets form respective circles centered on the positions of application to the surface of the substrate. A distance between any two adjacent droplets is equal to or less than the sum of the respective radii of the droplets. The distance is determined depending on the viscosity and flowability of the sample, the number of applied droplets, the water repellency of the substrate and so forth. Applying droplets to a substrate at such distances among them brings adjacent droplets into contact at their outer peripheries, resulting in spontaneous joint of adjacent droplets to integrate, thereby forming a larger drop consisting of a plurality of droplets.

Note that in the present invention, the number of droplets to be applied per position on the surface of a substrate is not particularly limited. A single droplet of a sample maybe applied to one position or a plurality of droplets of a sample may be applied to one position.

In the present invention, what is important is that a plurality of droplets are applied to positions where all the droplets finally join with one another. A plurality of droplets may be applied to a plurality of positions on the surface of a substrate simultaneously or a plurality of droplets may be applied attached one by one to each of a plurality of positions in order. In the case where a plurality of droplets are applied in order, a droplet is applied to a position where the droplet joins with a droplet or a drop consisting of a plurality of droplets that have already been applied to the surface of the substrate to form an integral body. Applying droplets one by one in order in this manner enables utilizing a usual microarrayer of the ink-jet type advantageously and also enables easier control of the position where a droplet or droplets are applied than in the case of simultaneous applying of a plurality of droplets.

In the present invention, with regard to the arrangement of a plurality of droplets to be joined, a positional relationship among the droplets is not particularly limited so far as the droplets are in a positional relationship where they are at least adjacent to each other. Such a positional relationship among the droplets includes a positional relationship inwhich straight lines drawn between the center of a droplet and each of the centers of two droplets adjacent to that droplet cross each other at an intersection point at an angle of 60° (that is, a positional relationship in which circles whose respective centers correspond to the vertices of an equilateral triangle are formed) and a positional relationship in which the above-mentioned straight lines cross each other at an intersection point at an angle of 90° (that is, a positional relationship in which circles whose respective centers correspond to the vertices of a square are formed) . In the present invention, the positional relationship among the droplets may vary depending on the physical properties of a sample and the substrate, such as the composition of a sample and the water repellency of the substrate. However, it is preferred that the positional relationship be adopted in which the above-mentioned straight lines cross each other at an intersection point at an angle of 90° in order to reduce the amount of the sample applied and to perform adjustment of the position of application of droplets with ease.

In the present invention, for the arrangement of aplurality of droplets on the surface of the substrate, it is preferable that droplets are applied to respective positions of a plurality of imaginary circles filled in a certain imaginary square on the surface of the substrate in order to join all of the plurality of the droplets and to change as appropriate the size of the spot finally formed. The arrangements of a plurality of circles (droplets) filled in the square include, for example, an arrangement in which circles (droplets) are arranged densely along sides of the square and an arrangement in which circles (droplets) are arranged densely along diagonal lines of a square and along the direction parallel thereto.

In the present invention, it is preferable that 2 to 100 droplets are joined with one another in order for a spot having a size that can easily be identified visually is finally formed. It is more preferable that 4 to 16 droplets are joined with one another. If the number of droplets is too small, it is difficult to identify the droplets visually. On the contrary, too larger a number of droplets are not preferable from the viewpoint of economy and productivity.

In the present invention, the shape of the spot finally formed is not limited to a circular one shown in the embodiments described hereinafter but may be other shapes such as an elliptical shape or a gourd shape. Further, in the present invention, the number of spots finally formed by joining all the droplets is not particularly limited. The number may be one or plural for one substrate.

According to the present invention, in the method for producing a microarray comprising applying droplets of a liquid sample containing a biological substance to a plurality of positions on a surface of a water repellent substrate using a microarrayer of the ink-jet type to form a spot on the surface of the substrate, a plurality of droplets are applied to positions where all the droplets join with one another to form the spot. Therefore, it is possible to easily, efficiently and uniformly form spots of sizes that can be easily observed visually by using a non-contact type microarrayer capable of forming minute spots.

Further, in the present invention, when the droplet is applied to a position where the droplet joins with a droplet or the drop on the surface of a substrate, it is more effective in producing a microarray with ease.

Furthermore, in the present invention, when a square is imaged on the surface of the substrate, the square is filled with a plurality of circles, and the droplets are applied to positions of respective circles, it is more effective in easily controlling the positions of applying droplets, reducing the amount of samples required for droplets and forming spots having arbitrary sizes.

Also, in the present invention, when 2 to 100 droplets are joined with each other, it is more effective in forming spots that can be identified visually, and when 4 to 16 droplets are joined with each other, it is still more effective in forming spots that can be identified visually.

### BRIEF DESCRIPTION OF THE DRAWINGS

Fig. 1 is a schematic diagram showing a state where a first droplet is applied in an embodiment of the present invention.
Fig. 2 is a schematic diagram showing a state where a second droplet is applied in an embodiment of the present invention.
Fig. 3 is a schematic diagram showing a drop A in an embodiment of the present invention.
Fig. 4 is a schematic diagram showing a state where a third droplet is applied in an embodiment of the present invention.
Fig. 5 is a schematic diagram showing a drop B in an embodiment of the present invention.
Fig. 6 is a schematic diagram showing a state where a fourth droplet is applied in an embodiment of the present invention.
Fig. 7 is a schematic diagram showing a drop C in an embodiment of the present invention.
Fig. 8 is a schematic diagram showing a spot formed finally in an embodiment of the present invention.
Fig. 9 is a schematic diagram showing another arrangement of droplets on a surface of a substrate and a spot finally formed from the arrangement.
Fig. 10 is a schematic diagram showing still another arrangement of droplets on a surface of a substrate and a spot finally formed from the arrangement.
Fig. 11 is a schematic diagram showing an example of a substrate that can be used advantageously in the present invention.
Fig. 12 is an enlarged view showing a colored spot obtained when droplets are applied at an interval of 0.2 mm in an example of the present invention.
Fig. 13 is an enlarged view showing a colored spot obtained when droplets are applied at an interval of 0.3 mm in an example of the present invention.
Fig. 14 is an enlarged view showing a colored spot obtained when droplets are applied at an interval of 0.4 mm in an example of the present invention.
Fig. 15 is an enlarged view showing a colored spot obtained when droplets are applied at an interval of 0.5 mm in an example of the present invention.

### DETAILED DESCRIPTION OF THE PREFERRED EMBODIMENTS

Hereinafter, a method for forming a spot having a size that can be easily identified visually by applying a plurality of droplets one by one in order at appropriate positions by using a microarrayer of the ink-jet type will be described in more detail.

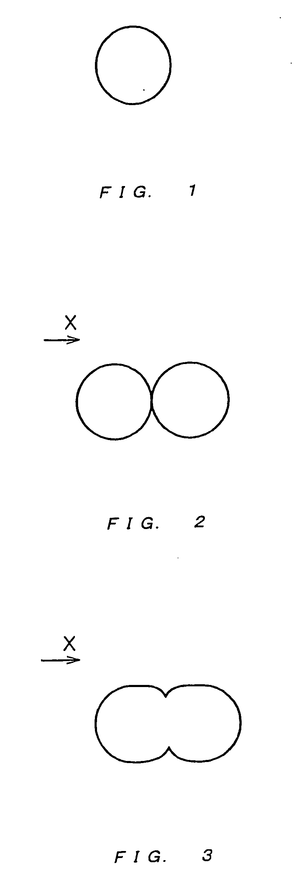

First, as shown in Fig. 1, a first droplet is applied to the surface of the substrate such as slide glass by using a microarrayer of the ink-jet type. Then, as shown in Fig. 2, a second droplet is applied in the same manner as in the case of the first droplet to a position apart from the position at which the first droplet is applied by a predetermined distance in the direction indicated by an arrow X shown in Fig. 2. When the outer periphery of the first droplet and the outer periphery of the second droplet contact each other, those droplets join to form an integral body as shown in Fig. 3. The integral body of those droplets is referred to as a "drop A".

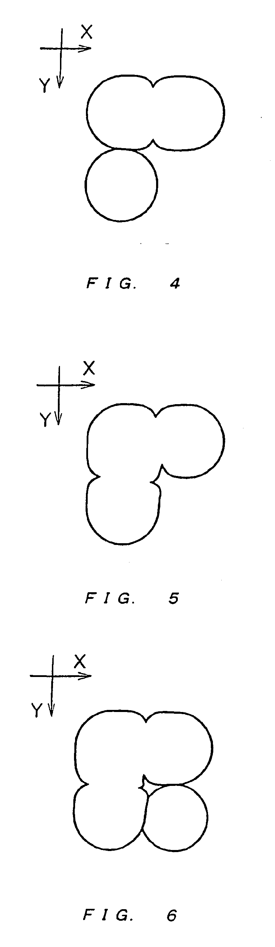

Next, as shown in Fig. 4, a third droplet is applied in the same manner as in the case of the first droplet to a position apart from the position at which the first droplet is applied by a predetermined distance in the direction indicated by an arrow Y shown in Fig. 4. When the outer periphery of the drop A and the outer periphery of the third droplet contact each other, those join to form an integral body as shown in Fig. 5. The integral body of those is referred to as a "drop B".

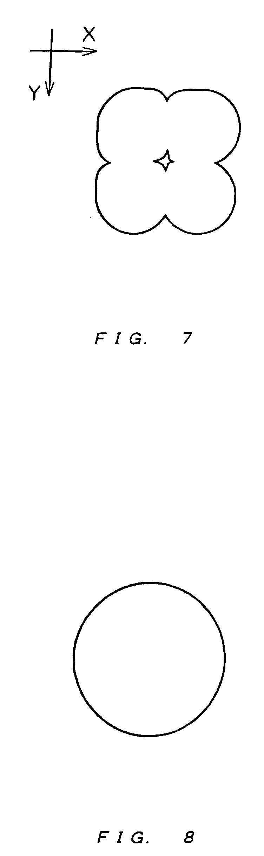

Then, as shown in Fig. 6, a fourth droplet is applied in the same manner as in the case of the first droplet to a position apart from the position at which the first droplet is applied by a predetermined distance in the direction indicated both by the arrow X and the arrow Y, respectively, shown in Fig. 6. When the outer periphery of the drop B and the outer periphery of the fourth droplet contact each other, those join to form an integral body as shown in Fig. 7. The integral body of those is referred to as a "drop C".

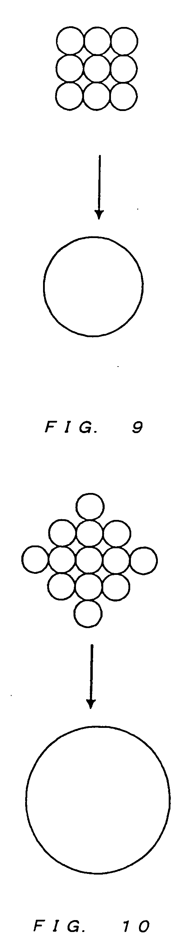

The drop C has a non-joined part in the center section as shown in Fig. 7. However, when the distances among the positions of application of the four droplets are equal to or less than the predetermined distance, the surface tension which exerts on the drop C acts in favor of a decrease in the surface area of the drop C. As a result, the sample reaches the above-mentioned non-joined section and constrictions between the droplets, so that finally, all the four droplets join with one another to form a single circular spot as shown in Fig. 8. Note that the distance between the positions of application may vary depending on the physical properties of the sample and substrate as described above.

In the case where a plurality of droplets are placed adjacent to join, the joined droplets of the sample spreads along the surface of the substrate from the joined section as will be apparent from, for example, Figs. 3, 5 and 7. Therefore, as compared with the case where the droplets are applied to one position to form the spot shown in Fig. 8, the case where the spot shown in Fig. 8 is formed by joining a plurality of droplets will provide a spot with less protuberation caused by surface tension. Therefore, spots having sizes that are visually observable with ease can be formed easily and efficiently and when the spots are used for the detection of biological substances, they can be easily detected by a coloring method.

Further, in the case where the spot shown in Fig. 8 is formed by applying droplets at a single position, a spot is formed with a large protuberance causedby surface tension. As a result, when such spots are used for the detect ion of biological substances, the biological substances tend to be detected as ring-like spots . As the reason, it is presumed that the biological substances tend to be fixed on the peripheral section than on the center section of the spot when the biological substance is fixed onto the surface of the substrate.

However, in the present invention, spots each having small protuberation caused by surface tension are finally formed, so that the biological substances tend to contact uniformly on the surface of the substrate that is in contact with the spots. As a result, the above-mentioned unevenness is difficult to occur and hence uniform spots can be formed which have sizes that can be easily identified by visual observation.

Note that although in the above-mentioned embodiment, two drops are arranged along each side of a square so that four drops are filled in the square, the present invention is not limited to such an embodiment. For example, as shown in Fig. 9, three droplets may be arranged along each side of a square so that nine droplets are filled in the square in total. Alternatively, droplets may be arranged as shown in Fig. 10, five droplets are arranged on each diagonal line of a square and three droplets are arranged on each side of each diagonal line along the direction parallel to the diagonal lines such that all the droplets are filled in the square. Thus, in the present invention, the size of the finally formed spot as a result of joint of all the droplets can be freely set by the number and arrangement of the droplets.

Further, in producing a microarray, usually a slide glass is used as a substrate. This is mainly because the slide glass does not absorb light having a wavelength in the ultraviolet region irradiated from a fluorescent scanner upon detecting the biological substances. In the present invention, however, since spots having sizes that can be easily identified visually can be formed, the detection of biological substances is not limited to the detection by a fluorescent scanner utilizing fluorescence labeling and detection with a coloring reagent may be advantageously adopted. Accordingly, plastics that have not been adopted as materials of the substrate for the detection used the fluorescent scanner for the reason that it is a material that absorbs the above-mentioned light having a wavelength in the ultraviolet region can be used advantageously as a material of the substrate. As is well known, plastics have a merit that it is easily molded.

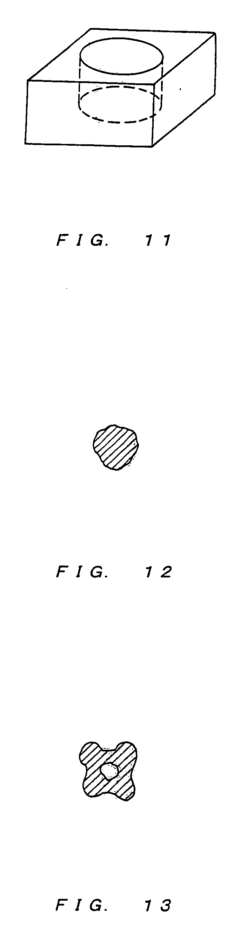

Therefore, in the present invention, substrates of arbitrary shapes that are different from the flat plate-like shape of a slide glass that has conventionally been used as a substrate can also be used. Examples of such substrates having arbitrary shapes include a substrate having a stereoscopic shape. Specific examples thereof include a substrate having a shape that serves also as a reactor, more particularly having a shape such that a vessel-like sample fixing part having a horizontal bottom part on which a biological substance is fixed and a wall part rises from the periphery of the bottom part is supported at a predetermined height as shown in Fig. 11.

### EXAPLE

### <Example>

Five minute droplets of a DNA sample were applied to a surface of a slide glass by using an ink-jet type microarrayer Nano-Plotter (manufactured by Gesim mbH) to apply a first droplet as shown in Fig. 1.

Then, as shown in Fig. 2, five minute droplets of the DNA sample were applied to a position 0.2 mm apart from the position where the first droplet was applied in the X direction shown in the figure to apply a second droplet.

Then, as shown in Fig. 4, five minute droplets of the DNA sample were applied to a position 0.2 mm apart from the position where the first droplet was applied in the Y direction shown in the figure to apply a third droplet.

Then, as shown in Fig. 6, five minute droplets of the DNA sample were applied to a position 0.2 mm apart from the position where the first droplet was applied both in the X direction and Y direction shown in the figure, respectively, to apply a fourth droplet. All the four droplets joined with one another to finally provide a spot of a diameter of about 0.5 mm.

The spot was hybridized with a biotin-labeled PCR product. The spot was colored blue by a biotin St-HRP/TMB. The colored spot thus obtained colored substantially uniformly and could be easily detected with a naked eye. Fig. 12 shows the finally obtained colored spot.

Here, the DNA in the DNA sample and the PCR product used in the present example are explained. As the DNA in the DNA sample, the DNA of SEQ ID No:1 shown in Table 1 below was used. On the other hand, as the PCR product, a substance obtained by subjecting the DNA of SEQ ID No:2 in Table 1 below to a PCR method to amplify a X DNA fragment having a sequence complementary to the DNA of SEQ ID No:1 shown in Table 1 below was used. Note that agarose electrophoresis of the obtained DNA fragment and ethidium bromide staining thereof indicated that the fragment had a length of about 100 bp.

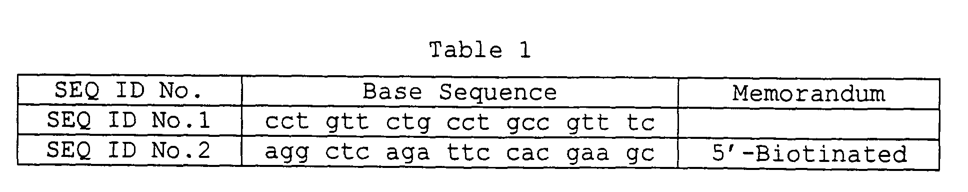

Further, spots were formed by the same method as the above-mentioned method except that the interval of the position of application of the first to fourth droplets were changed to 0.3 mm, 0.4 mm and 0.5 mm, respectively and the spots were colored. Figs. 13 to 15 show the finally obtained colored spots.

In the case where the interval of the position of application of the DNA sample was 0.2 mm, all the four droplets joined with each one another to become integral and provide a circular spot as shown in Fig. 12.

In the case where the interval of the position of application of the DNA sample was 0.3 mm, as shown in Fig. 13, adjacent two droplets out of the four droplets joined with each other but droplets on each diagonal line did not join with each other. Thus, a non-joined portion was left in the center of the spot so that not all the four droplets joined with one another. In addition, constrictions between the adjacent droplets were observed.

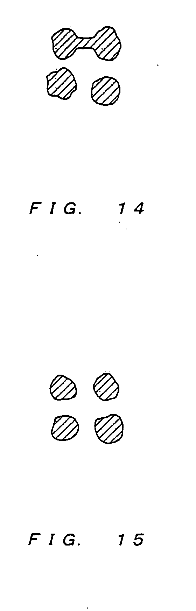

In the cases where the intervals of the position of application of the DNA sample were 0.4 mm and 0.5mm, respectively, as shown in Figs. 14 and 15, respectively, a state in which the adjacent droplets did not join with each other and a state in which the droplets on each diagonal line did not join with each other were observed, so that a state in which all the four droplets joined with one another did not occur.

## Claims

1. A method for producing a microarray which comprises a substrate and at least one spot of a sample on a surface of the substrate comprising:
applying droplets of a liquid sample containing a biological substance to a plurality of positions on a surface of a water repellent substrate by using a microarrayer of the ink-jet type having a jet tip, the microarrayer exerting a pressure on the liquid sample contained therein to eject a droplet amount of the liquid sample from the jet tip, to form a spot on the surface of the substrate,
wherein a plurality of the droplets are applied to positions where all the droplets join with one another to form the spot.

2. The method for producing a microarray according to claim 1, wherein the droplet is applied to a position where the droplet joins with a droplet or a drop consisting of a plurality of droplets that have already been applied to the surface of the substrate.

3. The method for producing a microarray according to claim 1 or 2, wherein the method further comprises:
imaging a square on the surface of the substrate, the square is filled with a plurality of circles, and
applying the droplets to respective positions of the circles.

4. The method for producing a microarray according to any one of claims 1 to 3, wherein 2 to 100 of the droplets are applied so that the droplets join with one another.

5. The method for producing a microarray according to any one of claims 1 to 4, wherein 4 to 16 of the droplets are applied so that the droplets join with one another.
